# NEUE EUROPÄISCHE PATENTSCHRIFT

(11) **EP 0 500 028 B2**
(45) Veröffentlichungstag und Bekanntmachung des Hinweises auf die Entscheidung über den Einspruch: **07.07.1999**
(45) Hinweis auf die Patenterteilung: 14.08.1996
(21) Anmeldenummer: 92102638.1
(22) Anmeldetag: 18.02.1992
(51) Int. Cl.: B29C 49/64, B29C 49/06

(54) **Verfahren zur Herstellung geblasener Hohlkörper aus Polypropylen**
Method for producing blow moulded containers made of polypropylene
Procédé pour la fabrication de corps creux soufflés en polypropylène

(30) Priorität: 21.02.1991 DE 4105403
(43) Veröffentlichungstag der Anmeldung: 26.08.1992
(73) Patentinhaber: BEKUM Maschinenfabriken GmbH, D-12107 Berlin (DE)
(72) Erfinder: Roos, Uwe-Volker, W-3123 Bodenteich (DE); Gittner, Franz, W-3111 Soltendieck (DE)
(74) Vertreter: Huss, Carl-Hans, Dipl.-Ing.

(56) Entgegenhaltungen:
- EP-A- 0 237 459
- DE-A- 2 814 952
- DE-A- 2 953 869
- DE-A- 3 130 129
- DE-A- 3 314 106
- DE-A- 3 411 905
- DE-A- 3 908 219
- Betriebshandbuch Coroplast B80, Ausgabe 1. Oktober 1985
- Prospekt Coroplast B60 "Für Flaschen und Behälter aus PET"
- Prospekt Coroplast B80 "So erfolgreich wie zuverlässig"

## Beschreibung

Die Erfindung richtet sich auf ein Verfahren zur Herstellung von Hohlkörpern aus Polypropylen, bei dem vorher hergestellte, einem Vorrat entnommene Vorformlinge in einem Ofen oder einer Heizstrecke erwärmt, danach in Axialrichtung gereckt und anschließend aufgeblasen werden. Weil für die Durchführung eines solchen Verfahrens zunächst Vorformlinge auf Vorrat hergestellt werden, die nach der Herstellung erkalten und vor der Verarbeitung wieder erwärmt werden, wird ein solches Verfahren von der Fachwelt auch "Reheat-Verfahren" genannt.

Reheat-Verfahren sind in großer Zahl bekannt, die, soweit der Anmelderin bekannt, in der Regel darauf abzielen, den Temperaturunterschied zwischen der Verfahrensausgangstemperatur (= Temperatur der einem Vorrat entnommenen Vorformlinge = Raumtemperatur) und der Verfahrensendtemperatur (= Temperatur der Verformung = Blastemperatur) möglichst schnell zu überwinden, d.h. die Zeitspanne der Erwärmung bis zur Blastemperatur möglichst kurz zu machen (z.B. US-PS 3,947,243). Dabei wird häufig so verfahren, daß die Umgebungstemperatur höher als die Zieltemperatur am Vorformling eingestellt wird, was zu einer zu hohen Temperatur am Vorformling führen kann.

Das Reheat-Verfahren bringt es mit sich, daß mit dem zunächst kalten und dann bei bekannten Verfahren möglichst schnell erwärmten Vorformling ihn berührende und teilweise auch auf ihn Kraft ausübende Handhabungen vorgenommen werden müssen. Dies kann im Ofen oder in der Heizstrecke beginnen, in der häufig der mit seinem offenen Ende auf Dorne gesteckte, fortbewegte und dabei für die allseitige Wärmeeinwirkung um seine Achse gedrehte Vorformling auf Steckdornen aufrecht steht. Dies führt aber erst dann zu einer häufig nachteiligen Beschädigung oder Verformung am Vorformling, wenn dessen Erwärmung fortgeschritten ist, insbesondere wenn er nach dem Verlassen der Heizstrecke für die Überführung in eine Reckeinrichtung ergriffen und danach in eine Blasform überführt wird, wie dies bei bekannten Verfahren der Fall ist, bei denen die für die Einführung der Vorformlinge in die Blasform erforderlichen Systemschritte im thermoelastischen Bereich erfolgen.

Da aber für eine genaue und den Vorformling möglichst nicht beschädigende Handhabung gewisse Mindestanforderungen an die Festigkeit und Steifheit des Vorformlings gestellt werden müssen, die im Gegensatz zu der bei bekannten Systemen angestrebten idealen Recktemperatur stehen, mußte man bisher zu Vorformlingsabmessungen greifen, die es trotz des thermoelastischen Zustandes erlaubten, von einer gewissen Steifheit bei der Handhabung auszugehen. Das bedeutet in der Praxis, daß die Dimensionen des Vorformlings, insbesondere seine Wanddicke, nach Kriterien ausgewählt werden mußten, die nicht auf die des zu fertigenden Hohlkörpers, sondern auf die der Handhabung vor dem Einführen in die Blasform ausgerichtet waren.

Von der Tatsache, daß die auf Recktemperatur gebrachten und dann von den Dornen genommenen ergriffenen und in die Blasform übergeführten Vorformlinge für Verformungen und Beschädigungen äußerst anfällig sind, rührt es auch her, daß bei bekannten Verfahren die Vorformlinge in der Regel auf Transportdonen aufgesteckt durch die Heizeinrichtungen geführt werden, und daß gespritzte Vorformlinge eingesetzt werden, deren Halspartie, mit Gewinde und eventuell genauer Innenabmessung im Spritz- oder Preßverfahren hergestellt, bereits vorhanden ist und auch beim Ausblasen zum fertigen Hohlkörper nicht mehr verändert wird. Abgesehen davon, daß dies häufig mehr Material als notwendig für die Halspartie erfordert, lassen sich so auch keine Hohlkörper herstellen, deren Verhältnis "Halsdurchmesser : Körperdurchmesser" groß ist.

Außerdem setzt diese Handhabung meist eine bestimmte Lage der Vorformlinge voraus. Wenn die Vorformlinge z.B. für das anschließende Recken von einer Zange ergriffen werden sollen, um sie in einen Reckrahmen zu spannen, so muß der einzelne Vorformling meist senkrecht aufrecht stehen, aber in der Praxis kommt es bei Anwendung vorbekannter Verfahren häufig vor, daß der teilweise erweichte Vorformling sich in dem Teil, in dem er nicht vom Steckdorn geführt ist, verbiegt, so daß die Zange ihn nicht aufrecht stehend ergreifen kann. Solche Vorformlinge passen dann nicht in die Reckeinrichtung oder Blasform, und es wird Ausschuß produziert. Daß axiale Recken eines Vorformlings vor seinem Aufblasen ist aber in vielen Fällen zweckmäßig, weil dadurch eine Molekülstreckung erfolgt, die sowohl die mechanischen Eigenschaften des fertigen Hohlkörpers als auch dessen Aussehen, z.B. die Transparenz, erheblich verbessern kann.

Hier setzt die Erfindung ein, die es ermöglicht, den Reckvorgang an dem Vorformling zu dem dafür günstigen Zeitpunkt durchzuführen. Hierzu schlägt die Erfindung vor, die Vorformlinge in einer Vorheizstrecke bis an eine Temperatur heranzuführen, die unterhalb der liegt, in der der Kunststoff teilelastisch wird und in diesen Abschnitt auch die Überführung in eine Reckeinrichtung zu legen, und erst danach auf Recktemperatur zu bringen, dann zu recken und in die Blasform zu überführen, d.h. daß die Vorformlinge nur soweit, aber auch nicht weniger erwärmt werden, als sie gerade noch mechanisch belastbar sind. Bis zu dieser Temperatur können sie in dichtestmöglicher Packung, d.h. bei kleinstmöglichem Raumbedarf, in längstmöglicher Aufheiz- und Durchlaufzeit von innen und außen gleichmäßig und gleichzeitig erwärmt werden. Da dann auch keine Gefahr besteht, daß sie im Ofen aneinanderkleben, kann ggf. auch auf das Aufstecken auf Dorne verzichtet werden, d.h. sie können waagerecht dicht beieinander den Ofen oder die Vorheizstrecke durchlaufen. Da die Heizzeit unterhalb der Temperatur, in der der Kunststoff beginnt elastisch zu werden, innerhalb bestimmter Grenzen eine untergeordnete Rolle spielt, weil keine Veränderung in der Struktur des Materials abläuft, spielt die eventuelle Länge der Durchlaufzeit keine Rolle, was als großer Vorteil im Hinblick auf mögliche Störungen im Ablauf des Verfahrens anzusehen ist.

Da bei Anwendung des Verfahrens nach der Erfindung die mechanische Belastbarkeit eine viel geringere Rolle als bei bisher bekannten Verfahren spielt, kann der ungereckte Vorformling in seinen Dimensionen so vorgegeben werden, daß seine Parameter, z.B. Wanddicke, allein auf den fertigen Hohlkörper ausgerichtet sind. Das aber bedeutet wiederum, daß der gereckte Vorformling in seinen Abmessungen äquivalent einem im Extrusions-Blasverfahren hergestellten und verarbeiteten Vorformling dimensioniert werden kann, wofür millionenfache Vorbilder existieren, die, wie z.B. Hohlkörpergewicht, Wanddicke, Halsdurchmesser usw., übertragbar sind. Das behebt Nachteile bekannter Verfahren und baut vorhandene Hemmschwellen für die Anwendung des Reheat-Verfahrens ab. Damit kann ein so geblasener Hohlkörper mit gleichem Gewicht wie ein im Extrusions-Blasverfahren hergestellter gefertigt werden, kann seine Wanddicke ebenso wie beim Extrusions-Blasverfahren ausgelegt werden und entsteht am Hals kein Materialeinschub und der Hals kann ausgeblasen werden und damit einen höheren Reckgrad aufweisen.

Aus dem Vorstehendenfolgt, daß die meisten Vorteile des Verfahrens nach der Erfindung ausgenützt werden können, wenn rohrförmige Vorformlinge, d.h. beidends offene Rohrabschnitte, verarbeitet werden. Zu diesen Vorteilen gehört z.B., daß das Verhältnis "Halsdurchmesser : Körperdurchmesser" groß sein kann, oder daß auch die Halspartie eines fertigen Hohlkörpers durch Ausblasen erzeugt werden kann. Dennoch ist aber das erfindungsgemäße Verfahren auch mit gespritzten Vorformlingen mit bereits endgefertigter Mündung durchführbar, weil die anderen geschilderten Vorteile sich auch in diesem Falle auswirken.

Am Ende der Vorheizstrecke werden die Vorformlinge in eine Reckeinrichtung übergeben und mit dieser an einer schnell regelbaren Heizquelle vorbeigeführt. Eine solche Fertigheizstrecke braucht dann nur noch den Temperaturunterschied zwischen einer Temperatur dicht unterhalb der Recktemperatur und der Recktemperatur zu überwinden, d.h. kann schnell zugewählt, wenn nötig auch schnell abgewählt werden, wie es z.B. bei Maschinenstörungen erforderlich werden kann.

Damit ist am Ende der Vorheizstrecke der Unterschied zwischen der gewünschten Recktemperatur und Vorheiztemperatur auch gleichzeitig der größte Temperaturunterschied bzw. größtmögliche Fehler, der in der Fertigheizung geregelt werden muß, also eine niedere maximale Temperaturfehlerquote bauartbedingt in den Verfahrensablauf einbezogen.

Sollen z.B. rohrförmige Vorformlinge einer Länge von 100 mm mit einem Außendurchmesser von 50 mm und einer Wanddicke von 3 mm aus COPP verarbeitet werden, so werden sie in der Vorheizstrecke auf z.B. 147°C erwärmt, dann durch Greifer auf Spannrahmen aufgebracht und anschließend in der Fertigheizstrecke auf 152°C weiter erwärmt und in die Blasform eingelegt. Dabei können sie z.B. 20 min in der Vorheizstrecke langsam auf die Vorheiztemperatur erwärmt, dann z.B. 5 min auf dieser gehalten werden und anschließend 0,5 bis 2 min die Fertigheizstrecke durchlaufen.

Das Temperatur-Zeit-Diagramm veranschaulicht schematisch, wie der Vorformling zunächst von der Ausgangstemperatur (Raumtemperatur) auf eine unterhalb der Verformungstemperatur (Zieltemperatur) liegende Vorheiztemperatur gebracht wird, wobei dies ohne Hast geschehen kann. Ist die Vorheiztemperatur erreicht, werden die Vorformlinge auf dieser gehalten und während dieser Zeit werden noch notwendige Handhabungen, z.B. Aufrichten und Einspannen in eine Reckeinrichtung, durchgeführt und erst danach der Schritt der Temperaturerhöhung bis zur Verformungstemperatur durchgeführt.

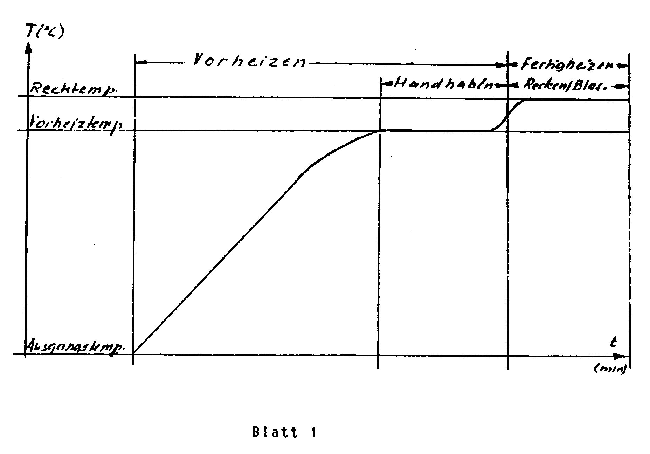

## Patentansprüche

1. Verfahren zur Herstellung von geblasenen Hohlkörpern aus Polypropylen, bei dem vorher hergestellte, einem Vorrat entnommene Vorformlinge in einem Ofen oder einer Heizstrecke erwärmt, danach in Axialrichtung gereckt und anschließend aufgeblasen werden, dadurch **gekennzeichnet,** daß die Vorformlinge in einer Vorheizstrecke an eine Temperatur dicht unterhalb der Recktemperatur herangeführt und für ihr Ergreifen und Überführen in eine Reckeinrichtung auf dieser Temperatur gehalten werden, wonach sie auf Recktemperatur weiter erhitzt, gereckt und danach aufgeblasen werden.

2. Verfahren nach dem Anspruch 1, dadurch **gekennzeichnet,** daß das Aufheizen auf die Vorheiztemperatur drei- bis fünfmal so lange wie das Halten auf der Vorheiztemperatur und dieses Halten auf der Vorheiztemperatur vierbis sechsmal so lange wie das Halten auf Fertigtemperatur dauert.

## Claims

1. Method for producing blow-moulded hollow bodies of polypropylene, in which previously produced parisons, which are taken from a store, are heated in an oven or a heating section, afterwards stretched in the axial direction and then blown, characterised in that the parisons are brought in a pre-heating section to a temperature just below the stretching temperature and maintained at this temperature for gripping and transfer to a stretching device, after which they are heated further to stretching temperature, stretched and afterwards blown.

2. Method according to claim 1, characterised in that the period of heating to the pre-heating temperature is three to five times as long as the period of maintaining the parisons at the pre-heating temperature, and this period of maintaining the parisons at the pre-heating temperature is four to six times as long as the period of maintaining them at the finishing temperature.

## Revendications

1. Procédé de fabrication de corps creux soufflés en polypropylène, dans lequel des préformes préparées au préalable et prélevées dans un stock sont chauffées dans un four ou dans parcours de chauffage, puis étirées dans le sens axial et ensuite soufflées, caractérisé en ce que les préformes sont amenées dans un parcours de préchauffage à une température juste en dessous de la température d'étirage et sont maintenues à cette température pour leur saisie et leur transfert dans un dispositif d'étirage, ensuite de quoi elles sont encore chauffées à la température d'étirage, étirées et puis soufflées.

2. Procédé selon la revendication 1, caractérisé en ce que le chauffage à la température de préchauffage dure trois à cinq fois plus longtemps que le maintien à la température de préchauffage et ledit maintien à la température de prechauffage dure quatre à six fois plus longtemps que le maintien à la température finale.
